(19) Europäisches Patentamt
European Patent Office
Office européen des brevets

(11) EP 0 752 389 B1

(12) **FASCICULE DE BREVET EUROPEEN**

(45) Date de publication et mention de la délivrance du brevet:
**12.01.2000 Bulletin 2000/02**

(51) Int. Cl.[7]: **C01B 33/158**

(21) Numéro de dépôt: **96420225.3**

(22) Date de dépôt: **02.07.1996**

(54) **Procédé pour la fabrication d'aérogels de silice monolithiques et aérogels de silice ainsi obtenus**

Verfahren zur Herstellung von monolitischen Aerogelen aus Kieselsäure und die so erhaltenen Aerogelen

Process for the preparation of monolithic silica aerogels and silica aerogels so obtained

(84) Etats contractants désignés:
**AT BE CH DE DK ES FI FR GB GR IE IT LI LU MC NL PT SE**

(30) Priorité: **07.07.1995 FR 9508573**

(43) Date de publication de la demande:
**08.01.1997 Bulletin 1997/02**

(73) Titulaires:
- **UNIVERSITE CLAUDE BERNARD - LYON 1**
  **F-69100 Villeurbanne Cédex (FR)**
- **PRODUITS CHIMIQUES AUXILIAIRES ET DE SYNTHESE (P.C.A.S.)**
  **91160 Longjumeau (FR)**
- **ARMINES**
  **F-75006 Paris (FR)**
- **CENTRE SCIENTIFIQUE ET TECHNIQUE DU BATIMENT**
  **F-75782 Paris Cédex 16 (FR)**

(72) Inventeurs:
- **Pajonk, Gérard**
  **69006 Lyon (FR)**
- **Elaloui, Elimame**
  **69120 Vaulx en Velin (FR)**
- **Begag, Redouane**
  **69500 Bron (FR)**
- **Durant, Marcel**
  **91540 Mennecy (FR)**
- **Chevalier, Bruno**
  **38100 Grenoble (FR)**
- **Chevalier, Jean-Luc**
  **38960 St. Etienne de Crossey (FR)**
- **Achard, Patrick**
  **06130 Le Plan de Grasse (FR)**

(74) Mandataire:
**Vuillermoz, Bruno et al**
**Cabinet Laurent & Charras**
**B.P. 32**
**20, rue Louis Chirpaz**
**69131 Ecully Cédex (FR)**

(56) Documents cités:
**EP-A- 0 171 722**
**EP-A- 0 629 810**
**WO-A-92/03378**
**US-A- 4 610 863**
**US-A- 4 835 017**

- **CERAMIC TRANSACTIONS (POROUS MATERIALS), vol. 31, pages 71-80, XP000600279 DOUGLAS M. SMITH & AL.: "Preparation of low-density aerogels at ambient pressure for thermal insulation"**
- **SOL-GEL PROCESSING AND APPLICATIONS-THE INTERNATIONAL SYMPOSIUM ON ADVANCES IN SOL-GEL PROCESSING AND APPLICATIONS,AUGUST 24-28, 1993, CHICAGO, pages 267-273, XP000579598 PAJONK G.M. & AL.: "Transparent monolithic silica carbogels (aerogels) using new polyethoxysilanes as precursors."**
- **JOURNAL OF NON-CRYSTALLINE SOLIDS, vol. 145, no. 1-3, 1 Août 1992, AMSTERDAM NL, pages 44-50, XP000311598 TILLOTSON & AL.: "Transparent ultralow-density silica aerogels prepared by a two step sol-gel process"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Xerox (UK) Business Services
2.16.7/3.6

(Cont. page suivante)

- MATERIALS LETTERS, vol. 3, no. 9-10, AMSTERDAM NL, pages 363-367, XP000579672 TEWARI & AL.: "Ambient-temperature supercritical drying of transparent silica aerogels"
- PATENT ABSTRACTS OF JAPAN vol. 016, no. 049 (C-0908), 7 Février 1992 & JP-A-03 252312 (KOROIDO RES:KK), 11 Novembre 1991,

## Description

L'invention concerne un procédé perfectionné pour la fabrication d'aérogels de silice se présentant sous forme de monolithes transparents dans le domaine du visible, et développant de très bonnes propriétés d'isolation thermique. Elle concerne également les aérogels de silice ainsi obtenus.

Cette invention est plus particulièrement destinée à être mise en oeuvre dans le secteur des vitrages. Cependant, elle ne saurait être limitée à cette seule application.

Dans le domaine du bâtiment, on souhaite aboutir à la réalisation de vitrages susceptibles à la fois de présenter des propriétés d'isolation thermique maximum, sans pour autant affecter la transmission de la lumière dans le domaine du visible. On cherche même aujourd'hui à obtenir des composants, dont les propriétés d'isolation thermique sont telles, que le facteur limitant relatif à cette propriété est non plus constitué par le matériau transparent proprement dit, mais par son système de fixation au niveau des fenêtres ou au niveau des façades. Le but ultime est l'obtention de vitrages présentant d'aussi bonnes propriétés d'isolation thermique que celles des parois opaques de batiment, selon les réglementations thermiques du batiment en vigueur.

Un grand nombre de solutions sont aujourd'hui proposées afin d'optimiser ces vitrages en terme d'isolation thermique. Parmi celles-ci, et indéniablement, le principe du double vitrage a constitué un progrès significatif par rapport au vitrage simple, puisque par ce biais, on a ainsi divisé par deux le coefficient de transmission thermique surfacique. Afin de réduire encore ce coefficient, on a proposé d'introduire au sein du double vitrage une couche d'un matériau à bas pouvoir émissif, qui, s'il permet certes d'aboutir au résultat recherché, grève de manière significative le coût de réalisation. On a également proposé de maintenir l'espace intervitres du double vitrage sous pression réduite. Outre la difficulté de mise en oeuvre d'une telle solution, compte tenu de la fragilité du verre et des problèmes d'étanchéité, les résultats obtenus ne se sont pas avérés très significatifs. On a également proposé de remplacer l'air de l'interface par de l'argon. Là encore, on obtient certes une amélioration des propriétés d'isolation thermique, mais au prix d'un surcoût non négligeable, et en tout cas, incompatible avec une diffusion du produit final à l'échelle industrielle.

Une autre solution a consisté à combler l'interface du double vitrage au moyen d'un aérogel. Les aérogels ont l'avantage de présenter de bonnes propriétés de transparence vis à vis de la lumière visible et d'excellentes propriétés d'isolation thermique. De fait, différentes techniques de fabrication de ces aérogels ont été développées ces derniers temps. De manière générale, les aérogels sont réalisés en mettant en oeuvre un procédé sol-gel, dans lequel le solvant utilisé est extrait afin d'aboutir à une texture poreuse de très faible densité. L'utilisation de tels aérogels dans le cadre de la réalisation de double vitrages, a par exemple été décrite dans le document EP-A-0 018 955. Ces aérogels ont été obtenus par le procédé sol-gel mentionné ci-dessus, consistant à soumettre un alcoxyde de silicium en solution dans un alcool à des réactions d'hydrolyse et de polycondensation, conduisant alors à un alcogel. L'aérogel est obtenu après séchage, c'est à dire, extraction de l'alcool hors de la structure poreuse de l'alcogel.

L'un des problèmes qui se posaient alors, résidait dans la nécessité d'éviter d'altérer la texture poreuse durant l'évaporation du solvant, ladite évaporation générant des forces de tension superficielle très intenses compte tenu de la très petite dimension des pores. On a montré qu'afin de s'affranchir de ces forces de tension superficielle, l'extraction du solvant devait intervenir dans des conditions de supercriticité dudit solvant. Les procédés de séchage de l'alcogel sous conditions supercritiques ont donné d'assez bons résultats en terme de transparence des aérogels. En effet, les tensions superficielles diminuent quasi-complètement aux températures et aux pressions nécessaires pour atteindre l'état de fluide supercritique, de telle sorte que la structure gel subit très peu de contraintes pendant la phase d'extraction du solvant. Toutefois, les conditions de supercriticité de l'alcool sont relativement draconiennes, puisqu'il faut atteindre une température typiquement supérieure à 270°C et des pressions très élevées de 12 à 13 MPa. De fait, le procédé de séchage supercritique est relativement onéreux et surtout gros consommateur de temps, puisqu'il nécessite typiquement deux à trois jours par extraction. Par ailleurs, dès lors que l'on manipule des solvants alcooliques à de telles conditions opératoires, les risques d'explosion sont démultipliés, et un processus opératoire particulièrement contraignant doit être respecté, afin de travailler dans de bonnes conditions de sécurité.

Afin de réduire significativement cette durée de traitement, et corollairement son coût, il a été proposé par exemple dans le document US-A-4 610 863, dans le cadre de la fabrication d'aérogels, certes d'utiliser un procédé de séchage supercritique, mais dans lequel le solvant alcoolique est substitué par du dioxyde de carbone sous forme liquide, jusqu'à substitution totale de l'alcool par le $CO_2$ liquide. En d'autres termes, on procède tout d'abord à une phase de "lavage", consistant à solubiliser ledit solvant dans le $CO_2$ liquide, à extraire ledit solvant ainsi solubilisé, puis à effectuer alors l'étape de séchage proprement dite lorsque plus aucune trace d'alcool n'est relevée. Le gel immergé dans le $CO_2$ liquide est porté aux conditions de supercriticité du dioxyde de carbone, c'est-à-dire typiquement à une température supérieure à 31,05°C, et sous une pression comprise entre 8 et 10 MPa. L'ensemble est maintenu sous ces conditions pendant une trentaine de minutes, puis le dioxyde de carbone est lentement évacué jusqu'à aboutir à la pression atmosphérique. On obtient alors un aérogel de silice présentant d'excellentes propriétés d'isolation thermique et une transparence dans le spectre visible satisfaisante. Cependant, la période de substitution du solvant par le dioxyde de carbone demeure relativement longue. Par ailleurs, on n'aboutit jamais à une totale solubilisation du solvant

dans le $CO_2$ liquide, de sorte qu'il subsiste toujours dans le gel un reliquat du solvant, susceptible d'affecter la structure poreuse dudit gel lors de la phase de séchage, et partant, la transparence de celui-ci. Par ailleurs, pour cette même raison, on risque d'observer des fissures ou craquelures au sein de l'aérogel, affectant ainsi sa monolithicité, et partant ses propriétés de résistances mécaniques, déjà intrinsèquement faibles.

L'objet de la présente invention est d'optimiser ce procédé en sélectionnant le composé silicium de base et le solvant organique avec lequel il est mélangé en vue de former le sol, ultérieurement transformé en gel, selon le procédé sol - gel.

Ce procédé pour la fabrication d'aérogels de silice monolithiques consiste :

- à hydrolyser et polycondenser en milieu acide un mélange à base d'un composé organique du silicium et d'un solvant organique, de telle sorte à obtenir un gel transparent ;
- puis, à substituer le solvant organique par du dioxyde de carbone liquide ;
- et enfin, à évacuer le dioxyde de carbone sous conditions de supercriticité dudit dioxyde de carbone afin d'obtenir un aérogel.

L'invention se caractérise en ce que le solvant organique mélangé au composé organique du silicium est constitué par de l'éthylacétoacétate.

Cette sélection permet tout d'abord de favoriser le caractère monolithique des aérogels, et d'autre part, d'optimiser la transparence dans le spectre visible des monolithes ainsi obtenus, car on a pu établir qu'une solubilisation totale de celui-ci dans le $CO_2$ liquide était réalisable.

Selon une caractéristique avantageuse de l'invention, le composé organique du silicium est un organo-alcoxysilane, et préférentiellement du tétraéthoxysilane.

Selon une autre caractéristique avantageuse de l'invention, le composé organique du silicium ou précurseur mélangé avec l'éthylacétoacétate est un prépolymère réalisé à base d'organo-alcoxysilane, à savoir le polyéthoxydisiloxane (PEDS), et plus spécifiquement à base de tétraéthoxysilane.

De manière connue, les prépolymères sont des composés du silicium du type éthoxy, formés par des chaînes plus ou moins longues de ponts siloxanes - Si - O - Si -, et contenant différents pourcentages de silice. Ils répondent à la formule brute suivante :

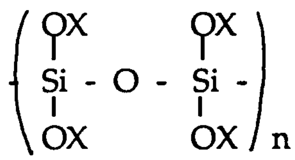

où X = R et peut être $C_2H_5$ ou Si-O.

Ces précurseurs peuvent être classés selon deux critères : leur taux de silice $SiO_2$ et leur degré d'hydrolyse.

Ces composés sont en effet obtenus en faisant réagir du tétraéthoxysilane (TEOS) avec une quantité d'eau sous-stoechiométrique en milieu alcoolique acide, notamment en présence d'acide sulfurique selon la réaction :

$$Si\,(OC_2H_5)_4 + n\,H_2O \rightarrow PEDS\text{-}P_x + \text{solvant}$$

où n est la fraction d'eau utilisé, n étant inférieur à 2.

On obtient un polyéthoxydisiloxane PEDS-$P_x$, où x = n/2 x 1000 .

Ainsi, pour un nombre n de moles d'eau, on obtient le PEDS-$P_{900}$, dont il sera abondamment fait état dans la suite de la description. Il correspond à un prépolymère à haut degré d'hydrolyse.

Selon une autre caractéristique de l'invention, le degré d'hydrolyse du prépolymère est compris entre 75 et 90%. Autrement dit, le nombre x est compris entre 750 et 900.

Selon une autre caractéristique de l'invention, la proportion de solvant dans le mélange de base en vue de la réalisation du procédé sol - gel est comprise entre 30 et 70%, afin d'obtenir de bonnes propriétés mécaniques.

Il va être maintenant décrit en liaison avec les figures annexées un exemple de mise en oeuvre du procédé de réalisation de l'invention en vue de la fabrication d'un aérogel de silice.

La figure 1 est un schéma illustrant le mode de détermination de grandeurs physiques mises en oeuvre dans la détermination des propriétés de transparence des aérogels réalisés conformément à l'invention.

La figure 2 est un ensemble de courbes représentant la variation du facteur de transmission au travers de divers échantillons en fonction de la longueur d'ondes.

La figure 3 est une représentation schématique de l'appareillage mis en oeuvre pour la détermination de la

conductivité thermique desdits échantillons.

<u>Première étape</u> : préparation d'un précurseur

Pour synthétiser ce précurseur, on commence par charger du TEOS, c'est à dire du tétraéthoxysilane de formule brute $Si(OC_2H_5)_4$ et une moitié de la quantité totale utilisée d'un alcool dans un réacteur, ledit alcool étant choisi dans le groupe comprenant le méthanol, l'éthanol et l'alcool isopropylique. On agite vigoureusement le mélange ainsi réalisé.
Dans un autre récipient, un mélange d'acide sulfurique (à 98 %) avec l'autre moitié de l'alcool isopropylique est préparé. Cette solution est ajoutée lentement (en une heure) à la première sous agitation. La quantité d'eau nécessaire pour l'hydrolyse partielle est additionnée doucement en deux heures, en maintenant la température inférieure à 37°C et ce, afin d'éviter toute précipitation de la silice.
Afin de fixer le pourcentage souhaité du précurseur en silice ($SiO_2$), on distille une partie de l'alcool contenu dans la solution obtenue.
Le produit obtenu est un prépolymère : un polyéthoxydisiloxane (PEDS-$P_x$), dont la formule brute est la suivante :

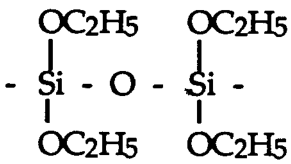

ou

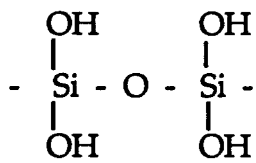

Dans le cadre de la présente description, le prépolymère utilisé a un degré d'hydrolyse de 90 %, c'est-à-dire que le nombre n de moles d'eau est égal à 1,8 et un taux de silice voisin de 28% : PEDS - $P_{900}$
On s'est rendu compte que pour aboutir à un produit final transparent, il importait que le degré d'hydrolyse soit compris entre 75 et 90 %. Si ce degré d'hydrolyse est inférieur à 75 %, la transparence devient rapidement altérée, même si les propriétés d'isolation thermique demeurent très bonnes. En revanche, si ce degré d'hydrolyse dépasse 90%, le prépolymère obtenu n'est pas stable. Il forme de fait un gel en quelques jours.

<u>Deuxième étape</u> : préparation d'un alcogel

L'étape suivante concerne la réalisation d'un alcogel monolithique, transparent, et exempt de fissure, se présentant sous la forme d'un parallélépipède. Pour ce faire, on met en oeuvre un processus sol-gel, mettant lui-même en oeuvre des réactions de polycondensation. On mélange le précurseur PEDS-$P_{900}$ obtenu au cours de l'étape précédente avec un solvant et éventuellement une quantité d'eau permutée, le solvant étant constitué selon une caractéristique fondamentale de l'invention par de l'éthylacétoacétate. Ce mélange, auquel il est ajouté un volume de 1 % d'acide fluorhydrique concentré (21 N), est mis sous agitation vigoureuse. On obtient de la sorte un gel à partir du sol initial qui va ensuite subir un séchage décrit ci-après plus en détail.
Cette étape sol-gel est accomplie dans un récipient faisant office de moule constitué par deux parois parallèles réalisées en vitres séparées, et maintenues par un joint en silicone. Au moins l'une des faces internes vitrées est enduite d'un revêtement d'huile de silicone ou reçoit une couche de polytétrafluoroéthylène (TEFLON : Marque déposée) afin d'éviter toute destruction du monolithe lors du démoulage après séchage.
La transformation en gel s'effectue de manière très rapide, typiquement en quelques secondes, et la transparence du gel obtenu est excellente, la température de réaction étant la température ambiante. Une fois la synthèse de l'alcogel transparent et monolithique réalisée, l'étape suivante consiste à sécher le gel.

<u>Troisième étape</u> : séchage du gel

Cette étape a pour but d'éliminer le solvant qui est emprisonné dans le réseau tridimensionnel formé par la silice, et de garantir à la fois la transparence et la monolithicité du gel.
On met ainsi en oeuvre du $CO_2$ liquide afin tout d'abord d'effectuer un échange $CO_2$ liquide/éthylacétoacétate présent dans le réseau de silice, puis d'extraire le $CO_2$ dans des conditions supercritiques. Le fait de réaliser l'évacuation du solvant hors du réseau de silice dans des conditions supercritiques, permet d'annuler la tension superficielle

dudit solvant qui quitte les pores du gel sans exercer les contraintes capillaires responsables de l'effondrement de la texture du gel à sécher.

Afin de mettre en oeuvre cette étape de séchage, on utilise un autoclave dans lequel on sèche l'échantillon. Pour ce faire, après fermeture de l'autoclave, celui-ci est rempli de dioxyde de carbone liquide par ouverture progressive d'une vanne d'entrée connectée à une bouteille de $CO_2$ à tube plongeant et d'un détendeur. Le remplissage par le $CO_2$ liquide s'effectue progressivement afin de ne pas créer de turbulences au sein de l'autoclave, susceptibles d'endommager les échantillons. Une fois l'autoclave plein de $CO_2$ liquide, la vanne de sortie de l'autoclave est ouverte afin de récupérer un mélange de carboglace et de solvant (éthylacétoacétate). On procède ainsi à une succession de phases statiques afin de permettre la solubilisation de l'éthylacétoacétate dans le $CO_2$ liquide, et d'étapes dynamiques d'extraction d'un mélange de carboglace et de solvant jusqu'à aboutir à l'évacuation totale dudit solvant. Lorsqu'après titrage, on n'observe plus de solvant dans le mélange extrait par la vanne de sortie de l'autoclave, celui-ci est isolé (vannes de sortie et d'entrée fermées). Il renferme à ce moment une quantité de $CO_2$ liquide permettant d'atteindre des conditions supercritiques.

On procède alors à une montée linéaire en température, jusqu'à dépasser la température critique du $CO_2$ ($T_c$ = 31,05°C), typiquement 40°C sous une pression de l'ordre de 80 à 100 bars, c'est-à-dire de 8 à 10 MPa. La durée du chauffage est d'environ une heure, et est suivie d'une période de stabilisation isotherme et isobare d'une durée voisine de trente minutes afin d'assurer notamment l'équilibre thermique fluide - gel. Puis on procède à une détente par évacuation du fluide supercritique ($CO_2$), détente que l'on essaie d'effectuer de manière isotherme. Compte tenu du fait que l'évacuation du fluide supercritique s'accompagne d'un refroidissement du corps de l'autoclave, on est donc amené à compenser cette perte de calories par un chauffage accessoire, afin justement de maintenir cette détente isotherme, et ce jusqu'à aboutir à la pression atmosphérique.

On balaie alors le contenu de l'autoclave par un courant d'azote. On isole l'autoclave et on diminue la température jusqu'à aboutir à la température ambiante selon une descente isobare.

Une variante de cette étape de séchage peut consister à injecter le $CO_2$ directement sous forme de fluide supercritique, c'est-à-dire à une température supérieure à 31,05°C et à une pression minimum de 8 MPa. Outre le gain de temps occasionné par l'utilisation de ce fluide supercritique, on a pu observer qu'en outre, les qualités de solvant du $CO_2$ sous cette forme étaient améliorées.

On obtient alors un aérogel sous forme monolithique et transparent présentant d'excellentes propriétés de transparence dans le domaine du visible de même que d'excellentes propriétés d'isolation thermique.

Afin de caractériser ces propriétés, on propose de définir les performances optiques du gel obtenu, par la méthode décrite ci-après. On utilise un spectrophotomètre de type Perkin-Elmer λ19, équipé d'une sphère d'intégration et de sources lumineuses couvrant le domaine spectral UV-visible et proche infra-rouge, c'est-à-dire des longueurs d'ondes couvrant l'intervalle compris entre 0,3 et 2,5 µm. Pour chacun des échantillons, on enregistre le spectre de transmission normal/hémisphérique et celui de la transmission normal/diffuse comme indiqué sur la figure 1. De ces données, on calcule le facteur de transmission lumineux normal/hémisphérique, noté $\tau_v^{nh}$, correspondant à une intégration pondérée du domaine visible du spectre (0,3 µm à 0,8 µm), et le facteur de transmission énergétique normal/hémisphérique, noté $\tau_e^{nh}$, correspondant à une intégration pondérée sur la totalité du domaine d'étude (0,3 à 2,5 µm). De la même manière, on calcule le facteur de transmission normal/directe $\tau_v^{nd}$.

Afin d'évaluer la transparence de l'aérogel ainsi obtenu, on détermine le rapport facteur de transmission lumineux normal/direct sur facteur de transmission lumineux normal/hémisphérique, appelé rapport de transparence et noté T.R De la sorte, T.R. est défini par la relation :

$$T.R. = \tau_v^{nd} / \tau_v^{nh} \times 100$$

On a ainsi représenté sur la figure 2 différentes courbes spectrales représentant la variation de la transmission normal/hémisphérique, normal/directe et normal/diffuse en fonction de la longueur d'ondes, dans la gamme spectrale 0,3 à 2,5 µm. On a respectivement :

- courbe I : pour un verre float, bien connu dans le cadre des la réalisation des simples et doubles vitrages, d'épaisseur de 4 mm ;
- courbe II : pour un aérogel de silice de 20 mm d'épaisseur, obtenu selon le procédé développé par la société AIRGLASS, c'est à dire Tetraméthoxysilane hydrolysé en présence d'ammoniaque et polycondensé dans du méthanol - phase de séchage effectuée en autoclave sous conditions supercritiques du méthanol ;
- courbe III : pour un aérogel conforme au procédé décrit ci-dessus, c'est-à-dire synthétisé à partir d'un précurseur constitué par du PEDS-$P_{900}$ avec une concentration volumique de solvant (éthylacétoacétate) de 50 % (échantillon CNS1), et dont l'épaisseur est de 10 mm ;
- courbe IV : pour un autre aérogel conforme à l'invention, c'est à dire synthétisé à partir d'un précurseur constitué par du PEDS-$P_{900}$ avec une concentration volumique de solvant (éthylacétoacétate) de 60% (échantillon C320), et

dont l'épaisseur est de 6 mm.

On a résumé dans le tableau 1 ci-après, les résultats des mesures optiques effectuées sur les échantillons présentés dans la figure 2.

| échantillon | $\tau_v^{nh}$ | $\tau_e^{nh}$ | $\tau_v^{nd}$ | T.R. |
|---|---|---|---|---|
| verre float 4mm | 90,1 | 88,2 | 88,2 | 97,9 |
| AIRGLASS | 63,9 | 71,6 | 50,8 | 79,5 |
| CNS1 | 88,6 | 88,5 | 77,0 | 86,9 |
| C320 | 90,8 | 90,4 | 82,4 | 90,8 |

Ainsi, plus le facteur TR est proche de 100, plus la vision et la reconnaissance des formes à travers le système optique sont bonnes et donc plus l'aérogel de silice est transparent.

A l'étude des caractéristiques optiques présentées, il convient également d'ajouter l'analyse des caractéristiques thermiques, puisque l'objectif de l'invention est d'aboutir à un aérogel monolithique transparent présentant d'excellentes propriétés d'isolation thermique.

A cet égard, ces propriétés d'isolation thermique peuvent être caractérisées par la valeur du coefficient de conductivité thermique $\lambda$. Ainsi, le verre est caractérisé par une conductivité thermique de $\lambda = 1$ W $m^{-1}K^{-1}$, très supérieure à celle de l'air : $\lambda = 0{,}024$ W $m^{-1}K^{-1}$. Cet écart est principalement dû à l'absence de porosité dans le verre. Or, l'aérogel de silice obtenu conformément à l'invention développe une très grande porosité de l'ordre de 83 à 96 %.

Afin de mesurer les caractéristiques thermiques des aérogels de silice obtenus, on a utilisé un appareillage schématisé sur la figure 3, et dont le principe repose sur la technique du choc thermique. On envoie une puissance électrique dans un fil chauffant (1) placé entre l'échantillon d'aérogel de silice (2) à mesurer et un isolant (3) dont la conductivité thermique est parfaitement connue, et l'on suit l'évolution de la température induite par ce flux en fonction du temps au moyen d'une sonde de lecture (4) de la température. La conductivité thermique est déterminée par la pente de la courbe représentant la température en fonction du logarithme du temps selon l'expression :

$$T = \frac{RI^2}{4\pi\lambda} \ln t + \text{constante}$$

où

- T est la température en degrés Celsius
- R est la résistance de chauffage en Ω/m
- I est l'intensité du courant en ampères
- t est le temps en secondes
- $\lambda$ est la conductivité thermique en W $m^{-1}K^{-1}$.

On aboutit ainsi à une valeur $\lambda$ de la conductivité thermique pour le premier échantillon CNS1 élaboré selon l'invention de 0,015 $Wm^{-1}K^{-1}$, et pour le deuxième C320 de 0,020 $Wm^{-1}K^{-1}$, lorsqu'ils sont soumis à la pression atmosphérique de l'air. Rapprochées d'un facteur de transmission lumineux en mode normal hémisphérique supérieur à 85%, ces valeurs confèrent à l'aérogel ainsi obtenu des propriétés tout particulièrement interessantes, spécialement recherchées notamment dans le domaine de la construction.

En d'autres termes, on aboutit à une valeur pour la conductivité thermique inférieure à celle de l'air et donc permettant la réalisation d'aérogels monolithiques transparents de très faible conductivité thermique, associé à des propriétés de transparence dans le domaine du visible très proches de celles du verre. De fait, les aérogels ainsi obtenus sont susceptibles d'être utilisés avec succès au sein de doubles vitrages, sous pression atmosphérique, compte tenu des spécificités recherchées concernant ces deux propriétés. Leur conductivité thermique apparente peut encore être abaissée, si de tels aérogels sont utilisés au sein de doubles vitrages, ou dans une enceinte quelconque sous pression atmosphérique de gaz rare, ou en pression subatmosphérique d'air ou de gaz rare.

Ainsi, la valeur $\lambda$ de la conductivité thermique pour ces mêmes échantillons obtenus selon le procédé de l'invention, devient inférieure ou égale à 0,015 $Wm^{-1}K^{-1}$ lorsqu'ils sont soumis à la pression atmosphérique d'un gaz

rare de l'air, notamment Argon, Xénon ou Krypton.

Par ailleurs, d'autres applications peuvent être envisagées pour ce matériau, notamment pour les panneaux super-isolants dans le domaine de l'industrie du froid, les portes de fours, les couvertures des capteurs solaires, les modules d'isolation transparents et par ailleurs, les supports de catalyseurs, compte tenu de sa surface spécifique particulièrement développée de par sa structure poreuse.

## Revendications

**1.** Procédé pour la fabrication d'aérogels de silice monolithiques consistant :

- à hydrolyser et polycondenser en milieu acide un mélange à base d'un composé organique du silicium et d'un solvant organique, de telle sorte à obtenir un gel transparent ;
- puis, à substituer le solvant organique par du dioxyde de carbone liquide;
- et enfin, à évacuer le dioxyde de carbone sous conditions de supercriticité dudit dioxyde de carbone afin d'obtenir un aérogel,
  ***caractérisé*** en ce que le solvant organique mélangé au composé organique du silicium est constitué par de l'éthylacétoacétate.

**2.** Procédé pour la fabrication d'aérogels de silice selon la revendication 1, ***caractérisé*** en ce que le composé organique du silicium est un organo-alcoxysilane, et préférentiellement du tétraéthoxysilane.

**3.** Procédé pour la fabrication d'aérogels de silice selon la revendication 1, ***caractérisé*** en ce que le composé organique du silicium est constitué par un prépolymère : un polyéthoxydisiloxane, réalisé à base d'organo-alcoxysilane, et préférentiellement à base de tétraéthoxysilane.

**4.** Procédé pour la fabrication d'aérogels de silice selon la revendication 3, ***caractérisé*** en ce que le polyéthoxydisiloxane est synthétisé par hydrolyse en condition sous-stoechiométriques d'eau à partir de tétraéthoxysilane et d'un alcool choisi dans le groupe comprenant le méthanol, l'éthanol et l'alcool isopropylique.

**5.** Procédé pour la fabrication d'aérogels de silice selon l'une des revendications 3 et 4, ***caractérisé*** en ce que le degré d'hydrolyse du polyéthoxydisiloxane, défini comme étant la moitié du nombre de moles d'eau mise en oeuvre lors de l'hydrolyse du tétraéthoxysilane, est compris entre 0,75 et 0,90.

**6.** Procédé pour la fabrication d'aérogels de silice selon l'une des revendications 1 à 5, ***caractérisé*** en ce que la proportion d'éthylacétoacétate dans le mélange de base en vue de la réalisation du procédé sol - gel est comprise entre 30 et 70% en volume.

**7.** Procédé pour la fabrication d'aérogels de silice selon l'une des revendications 1 à 6, ***caractérisé*** en ce que le mélange du précurseur avec l'éthylacétoacétate s'effectue en catalyse acide, et préférentiellement avec de l'acide fluorhydrique.

**8.** Procédé pour la fabrication d'aérogels de silice selon l'une des revendications 1 à 7, ***caractérisé*** en ce que l'hydrolyse du mélange de base s'effectue en l'absence d'eau.

**9.** Aérogel de silice réalisé par procédé sol-gel par réaction d'hydrolyse et de polycondensation d'un composé organique du silicium avec un solvant organique, ***caractérisé*** en ce qu'il présente concomitamment une conductivité thermique inférieure ou égale à 0,025 $Wm^{-1}K^{-1}$ lorsqu'il est soumis à la pression atmosphérique de l'air, et un facteur de transmission lumineux en mode normal hémisphérique supérieur à 85 % pour une épaisseur de 10 millimètres.

**10.** Aérogel de silice réalisé par procédé sol-gel par réaction d'hydrolyse et de polycondensation d'un composé organique du silicium avec un solvant organique, ***caractérisé*** en ce qu'il présente une conductivité thermique inférieure ou égale à 0,015 $Wm^{-1}K^{-1}$ lorsqu'il est soumis à la pression atmosphérique d'un gaz rare de l'air, et notamment de l'Argon, du Xénon ou du Krypton.

## Claims

**1.** A process for the preparation of a monolithic silica aerogel, consisting:

- in subjecting a mixture based on an organosilicon compound and an organic solvent to hydrolysis and polycondensation in an acidic medium, so as to obtain a transparent gel;
- in then substituting the organic solvent by liquid carbon dioxide;
- and finally in evacuating the carbon dioxide under conditions of supercriticality of said carbon dioxide in order to obtain an aerogel,

  wherein the organic solvent mixed with the organosilicon compound is constituted of ethyl acetoacetate.

**2.** The process for the preparation of a silica aerogel as claimed in claim 1, wherein the organosilicon compound is an organoalkoxysilane and, preferably, tetraethoxysilane.

**3.** The process for the preparation of a silica aerogel as claimed in claim 1, wherein the organosilicon compound comprises a prepolymer: a polyethoxydisiloxane produced from an organoalkoxysilane and, preferably, from tetraethoxysilane.

**4.** The process for the preparation of a silica aerogel as claimed in claim 3, wherein the polyethoxydisiloxane is synthesized by hydrolysis under substoichiometric conditions of water from tetraethoxysilane and an alcohol chosen from the group consisting of methanol, ethanol and isopropyl alcohol.

**5.** The process for the preparation of a silica aerogel as claimed in either of claims 3 and 4, wherein the degree of hydrolysis of the polyethoxydisiloxane, defined as half the number of mols of water employed in the course of hydrolysis of the tetraethoxysilane, is between 0.75 and 0.90.

**6.** The process for the preparation of a silica aerogel as claimed in any one of claims 1 to 5, wherein the proportion of ethyl acetoacetate in the base mixture, with a view to the implementation of the solgel process, is between 30 and 70 % by volume.

**7.** The process for the preparation of a silica aerogel as claimed in any one of claims 1 to 6, wherein the precursor is mixed with the ethyl acetoacetate under acid catalysis, preferably with hydrofluoric acid.

**8.** The process for the preparation of a silica aerogel as claimed in any one of claims 1 to 7, wherein the base mixture is hydrolyzed in the absence of water.

**9.** A silica aerogel prepared by the sol-gel process by the hydrolysis and polycondensation reaction of an organosilicon compound with an organic solvent, characterized in that concomitantly it has a thermal conductivity of less than or equal to 0.025 $Wm^{-1}K^{-1}$ when subject to the atmospheric pressure of air, and a light transmission factor in normal hemispherical mode which is greater than 85 % for a thickness of 10 millimeters.

**10.** A silica aerogel prepared by a sol-gel process by the hydrolysis and polycondensation reaction of an organosilicon compound with an organic solvent, characterized in that it has a thermal conductivity of less than or equal to 0.015 $Wm^{-1}K^{-1}$ when subject to the atmospheric pressure of a noble gas of the air, and especially argon, xenon or krypton.

**Patentansprüche**

**1.** Verfahren zur Herstellung monolithischer Kieselsäureaerogels, welches darauf beruht:

- eine Mischung auf der Grundlage einer organischen Verbindung des Siliziums und eines organischen Lösungsmittels derart einer Hydrolyse und einer Polykondensation in saurem Medium zu unterziehen, daß ein transparentes Gel erhalten wird;
- anschließend das organische Lösungsmittel durch flüssiges Kohlendioxid zu ersetzen;
- und schließlich das Kohlendioxid unter superkritischen Bedingungen des Kohlendioxids abzuführen, um ein Aerogel zu erhalten,

  **dadurch gekennzeichnet,** daß das der organischen Verbindung des Siliziums beigemengte organische Lösungsmittel durch Ethylacetoacetat gebildet wird.

**2.** Verfahren zur Herstellung von Kieselsäureaerogels nach Anspruch 1, **dadurch gekennzeichnet,** daß die organische Verbindung des Siliziums ein Organoalkoxysilan ist, und vorzugsweise Tetraethoxysilan.

3. Verfahren zur Herstellung von Kieselsäureaerogels nach Anspruch 1**, dadurch gekennzeichnet,** daß die organische Verbindung des Siliziums von einem Vorpolymerisat gebildet wird, und zwar einem Polyethoxydisiloxan gebildet auf der Grundlage von Organoalkoxysilan, und vorzugsweise auf der Grundlage von Tetraethoxysilan.

4. Verfahren zur Herstellung von Kieselsäureaerogels nach Anspruch 3, **dadurch gekennzeichnet,** daß das Polyethoxydisiloxan durch Hydrolyse unter unterstöchiometrischen Bedingungen von Wasser aus Tetraethoxysilan und einem Alkohol ausgewählt aus der Gruppe Methanol, Ethanol und Isopropylalkohol synthetisch hergestellt wird.

5. Verfahren zur Herstellung von Kieselsäureaerogels nach einem der Ansprüche 3 und 4, **dadurch gekennzeichnet,** daß der Hydrolysegrad des Polyethoxydisiloxans, welcher als die Hälfte der Molzahl des bei der Hydrolyse des Tetraethoxysilans eingesetzten Wassers definiert ist, im Bereich zwischen 0,75 und 0,90 liegt.

6. Verfahren zur Herstellung von Kieselsäureaerogels nach einem der Ansprüche 1 bis 5, **dadurch gekennzeichnet,** daß der Gehalt an Ethylacetoacetat in der Grundmischung im Hinblick auf die Durchführung des Sol-Gel-Verfahrens im Bereich zwischen 30 und 70 Vol% liegt.

7. Verfahren zur Herstellung von Kieselsäureaerogels nach einem der Ansprüche 1 bis 6, **dadurch gekennzeichnet,** daß die Mischung des Vorläufers mit dem Ethylacetoacetat in saurer Katalyse erfolgt, und vorzugsweise mit Fluorwasserstoffsäure.

8. Verfahren zur Herstellung von Kieselsäureaerogels nach einem der Ansprüche 1 bis 7, **dadurch gekennzeichnet,** daß die Hydrolyse der Grundmischung in Abwesenheit von Wasser erfolgt.

9. Kieselsäureaerogel hergestellt mittels Sol-Gel-Verfahren durch Hydrolyse- und Polykondensationsreaktion einer organischen Verbindung des Siliziums mit einem organischen Lösungsmittel, **dadurch gekennzeichnet,** daß es gleichzeitig eine spezifische Wärmeleitfähigkeit von 0,025 $Wm^{-1}K^{-1}$ oder weniger aufweist, wenn es dem atmosphärischen Druck der Luft ausgesetzt wird, und einen Lichtdurchlässigkeitsfaktor im normalen hemisphärischen Modus von mehr als 85 % bei einer Dicke von 10 Millimetern.

10. Kieselsäureaerogel hergestellt mittels Sol-Gel-Verfahren durch Hydrolyse- und Polykondensationsreaktion einer organischen Verbindung des Siliziums mit einem organischen Lösungsmittel, **dadurch gekennzeichnet,** daß es eine spezifische Wärmeleitfähigkeit von 0,015 $Wm^{-1}K^{-1}$ oder weniger aufweist, wenn es dem atmosphärischen Druck eines Edelgases der Luft, und insbesondere Argon, Xenon oder Krypton ausgesetzt wird.

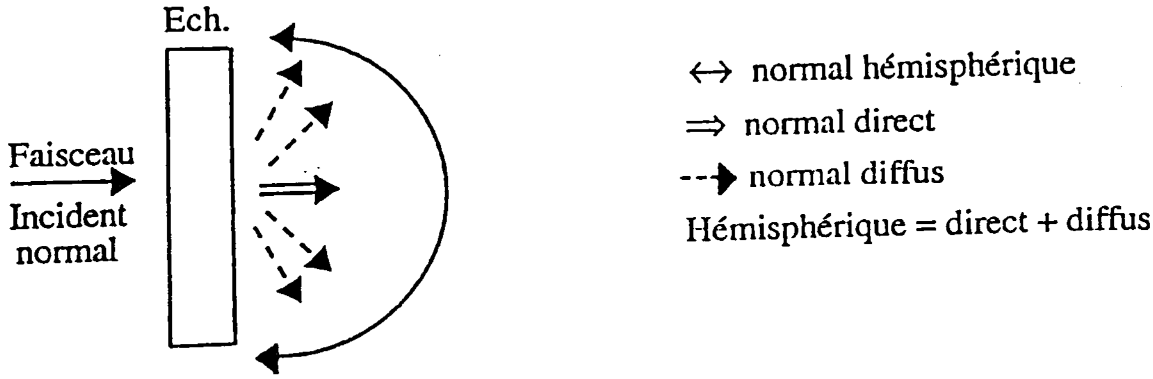
Ech.
Faisceau
Incident
normal
↔ normal hémisphérique
⇒ normal direct
--➤ normal diffus
Hémisphérique = direct + diffus

FIG 1

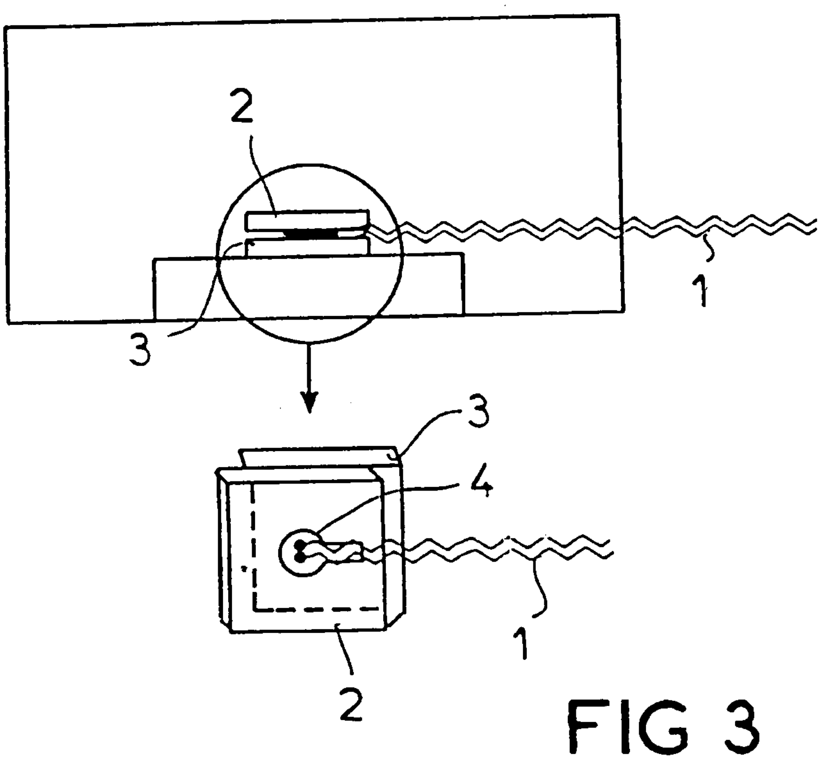
2
1
3
3
4
1
2

FIG 3

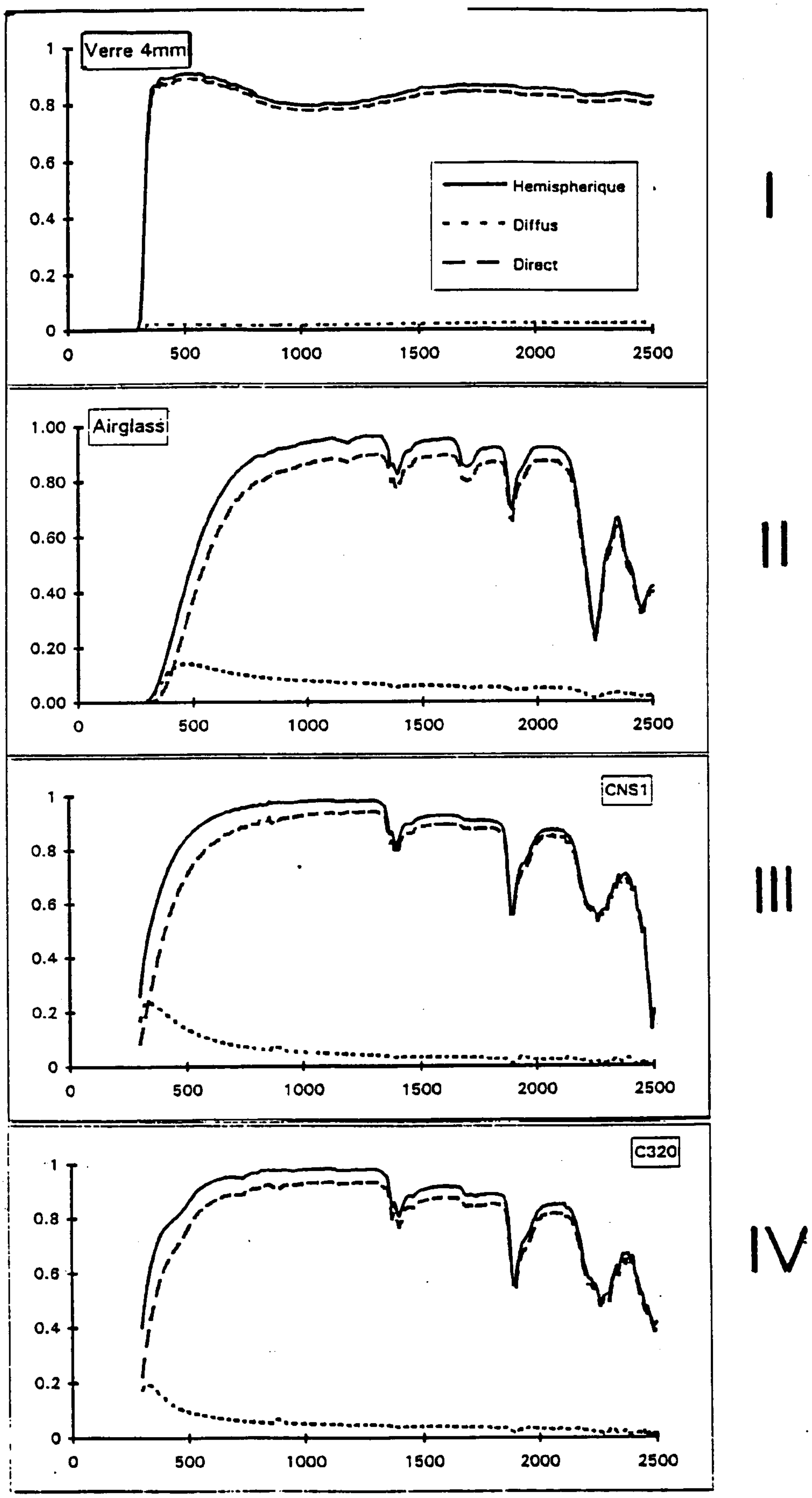
Verre 4mm
Hemispherique
Diffus
Direct
I
Airglass
II
CNS1
III
C320
IV
0
500
1000
1500
2000
2500

FIG 2